# NEUE EUROPÄISCHE PATENTSCHRIFT

(11) **EP 1 396 653 B2**
(45) Veröffentlichungstag und Bekanntmachung des Hinweises auf die Entscheidung über den Einspruch: **13.07.2011**
(45) Hinweis auf die Patenterteilung: 14.09.2005
(21) Anmeldenummer: 03014781.3
(22) Anmeldetag: 28.06.2003
(51) Int. Cl.: F16D 65/12

(54) **Bremsscheibe**
Brake disc
Disque de frein

(30) Priorität: 05.09.2002 DE 10241031
(43) Veröffentlichungstag der Anmeldung: 10.03.2004
(73) Patentinhaber: BPW Bergische Achsen KG, 51674 Wiehl (DE)
(72) Erfinder: Siebel, Reiner, 53804 Much (DE)
(74) Vertreter: Christophersen & Partner

(56) Entgegenhaltungen:
- EP-A- 1 162 385
- EP-A- 1 191 245
- EP-A1- 0 049 527
- EP-A2- 0 860 626
- DE-A1- 3 012 420
- DE-A1- 19 505 724
- DE-A1- 19 929 391
- JP-A- 2002 046 408
- US-A- 4 503 944
- US-A- 5 938 292
- US-B1- 6 173 821
- PATENT ABSTRACTS OF JAPAN Bd. 0081, Nr. 89 (M-321), 30. August 1984 (1984-08-30) & JP 59 080535 A (HINO JIDOSHA KOGYO KK), 10. Mai 1984 (1984-05-10)

## Beschreibung

Die Erfindung betrifft eine Bremsscheiben-Naben-Konstruktion mit einem einander gegenüberliegenden Reibflächen aufweisenden Reibring, der über ein etwa zylindrisches Zwischenstück mit einem ringförmigen Flansch zur Befestigung an einem Flansch einer Radnabe versehen ist, wobei Öffnungen zum Ablauf von sich im Ringspalt zwischen Radnabe und Bremsscheibe ansammelndem Wasser vorgesehen sind.

Eine derartige Bremsscheiben-Naben-Konstruktion ist bekannt (siehe z.B. US-A-4 503 944). Zwischen Bremsscheibe und Radnabe, die über ihre Flansche miteinander verbunden sind, verläuft ein Ringspalt, der verhindert, daß in der Bremsscheibe entstehende Wärme, insbesondere über das zylindrische Zwischenstück durch Wärmeleitung in die Nabe gelangt und diese unzulässig erwärmt. In diesem Ringspalt kann sich bei feuchter Straße Wasser ansammeln, weshalb in der Nähe des Befestigungsflansches der Bremsscheibe in deren zylindrischem Zwischenstück Bohrungen angebracht werden, durch die das Wasser ablaufen kann.

Diese Bohrungen im Übergang des Zwischenstückes zum Befestigungsflansch bewirken einerseits eine Schwächung der Bremsscheibe, weshalb üblicherweise lediglich zwei derartige Bohrungen hergestellt werden. Andererseits reicht eine derart geringe Anzahl von Bohrungen nicht aus, bei ungünstiger Stellung des Rades für eine vollständige Entwässerung des Ringspaltes zu sorgen, da sich nur im günstigsten Fall eine der Bohrungen an der tiefsten Stelle befindet. Neben einer Beeinträchtigung der Festigkeit der Bremsscheibe durch spanende Bearbeitung besitzt deshalb die bekannte Ausführung eine mangelhafte Wirkung, die zu Rostschäden an der Nabe und Bremsscheibe führt.

Der Erfindung liegt die **Aufgabe** zugrunde, bei einer Bremsscheiben-Naben-Konstruktion der eingangs beschriebenen Art für eine vollständige Entwässerung des zwischen Bremsscheibe und Nabe gebildeten Ringspaltes zu sorgen, ohne die Bremsscheibe durch Einbringen der Bohrungen in ihrer Festigkeit zu beeinträchtigen.

Die **Lösung** dieser Aufgabenstellung ist durch eine Bremsscheiben-Naben-Konstruktion gekennzeichnet, bei der die Ablauföffnungen in Form von taschenartigen Vertiefungen in der Anlagefläche der Flansche der Bremsscheibe und/oder der Radnabe ausgebildet sind. Diese erstrecken sich vorzugsweise in radialer Richtung über mindestens die gesamte Breite der Anlagefläche zumindest einer der Flansche.

Die taschenartigen Vertiefungen, die bereits beim Gießen, also nicht durch spanabhebende Bearbeitung entstehen, sind in der Anlagefläche der Flansche der Bremsscheibe und/oder der Radnabe ausgebildet und erstrecken sich in radialer Richtung derart über die Anlageflächen, daß eine durchgehende Ablauföffnung entsteht. Bei Ausbildung der taschenartigen Vertiefungen sowohl in der Bremsscheibe als auch in der Radnabe ergeben diese die Ablauföffnungen, sofern sie die Anlagefläche mindestens eines der Flansche überbrücken. Die taschenartigen Vertiefungen können hierbei gemeinsam oder getrennt eine Ablauföffnung bilden. Da die Bremsscheibe und die Radnabe durch die Radbolzen relativ zueinander exakt fixiert sind, ergibt sich bei der Zuordnung der taschenartigen Vertiefungen kein Problem.

Außer einer Verbesserung der Wirkung durch vollständiges Entwässern ohne Beeinträchtigung der Festigkeit haben die erfindungsgemäßen taschenartigen Vertiefungen gegenüber den bekannten Bohrungen noch einen entscheidenden Vorteil: Sie bewirken aufgrund der radialen Ausrichtung der Ablauföffnungen gleichzeitig eine bessere Kühlung der Bremsscheibe, da aufgrund der Zentrifugalkraft Luft aus dem Ringspalt zwischen Bremsscheibe und Nabe abgeführt wird, die einen Teil der in das zylindrische Zwischenstück der Bremsscheibe eingeleiteten Wärmemenge durch Konvektion aufnimmt und über die durch die taschenartigen Vertiefungen gebildeten Ablauföffnungen nach außen abführt. Die erfindungsgemäßen taschenartigen Vertiefungen haben somit auch bezüglich der Wärmeabfuhr aus dem Ringspalt eine positive Wirkung.

Wenn der Flansch der Radnabe mit Vorsprüngen zur Aufnahme der Radbolzen versehen und der Flansch der Bremsscheibe ringförmig ausgebildet ist, können gemäß einem weiteren Merkmal der Erfindung die taschenartigen Vertiefungen zumindest im Bereich einiger der Täler der wellenförmigen Außenkontur der Radnabe ausgebildet sein. Die radiale Erstreckung der taschenartigen Vertiefungen verkürzt sich in diesem Fall, da lediglich die radiale Breite der gewellten Anlagefläche der Nabe im Bereich der Wellentäler überbrückt werden muß. Dies hat eine geringere radiale Erstreckung der taschenartigen Vertiefungen zur Folge. Gleichzeitig reicht deren Anzahl aus, wenn in jedem Tal der wellenförmigen Außenkontur der Radnabe eine derartige Tasche angeordnet wird.

Gemäß einem weiteren Merkmal der Erfindung wird vorgeschlagen, die taschenartigen Vertiefungen ausschließlich im Flansch der Bremsscheibe auszubilden. In diesem Fall reicht es aus, beim Gießen der Bremsscheibe die taschenartigen Vertiefungen vorzusehen, ohne daß eine Veränderung der Radnabe erforderlich ist.

Auf der Zeichnung sind in einer perspektivischen, teilweise geschnittenen Darstellung der Stand der Technik und ein bevorzugtes Ausführungsbeispiel der Erfindung sowie mehrere Möglichkeiten zur Bildung der taschenartigen Vertiefungen dargestellt, und zwar zeigt:
- Fig. 1: eine perspektivische Darstellung des Standes der Technik, teilweise im Schnitt,
- Fig. 2: eine bevorzugte Ausführungsform der Erfindung entsprechend der Darstellung in Fig. 1.

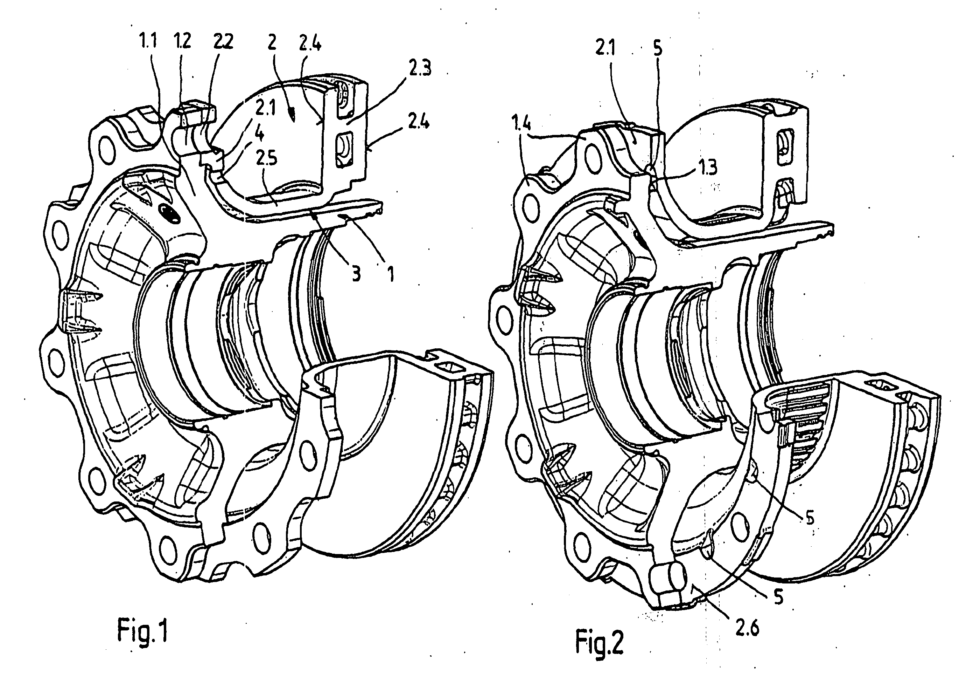

Der in Fig. 1 dargestellte Stand der Technik und das bevorzugte Ausführungsbeispiel nach Fig. 2 zeigen eine Nabe 1, an deren Flansch 1.1 der Flansch 2.1 einer Bremsscheibe 2 befestigt ist. Die Befestigung erfolgt mittels der in der Zeichnung nicht dargestellten Radbolzen, die in Bohrungen 1.2 bzw. 2.2 eingesetzt werden. Die Bremsscheibe 2 umfaßt einen einander gegenüberliegende Reibflächen 2.4 aufweisenden Reibring 2.3, der über ein im wesentlichen zylindrisches Zwischenstück 2.5 mit dem Flansch 2.1 einstückig verbunden ist.

Zwischen dem zylindrischen Teil der Nabe 1 und dem Zwischenstück 2.5 ist ein Ringspalt 3 gebildet. In diesem Ringspalt 3, dessen Begrenzungsflächen sowohl der Nabe 1 als auch der Bremsscheibe 2 unbearbeitet sind, sammelt sich bei feuchter Fahrbahn Wasser. Beim Stand der Technik gemäß Fig. 1 wird dieses Wasser durch Bohrungen 4 abgeleitet, die im zylindrischen Zwischenstück 2.5 in der Nähe des Flansches 2.1 angebracht werden. Diese durch spanabhebende Bearbeitung erfolgende Einbringung der Bohrungen schwächt einerseits die Bremsscheibe 2. Andererseits führt sie nur zu einer ungenügenden Entwässerung des Ringspaltes 3, da sich nur im Ausnahmefall bei einem Stillstand des Rades eine Bohrung 4 an der tiefsten Stelle des Ringspaltes 3 befindet.

Bei dem in Fig. 2 dargestellten bevorzugten Ausführungsbeispiel der Erfindung sind die Ablauföffnungen in Form von taschenartigen Vertiefungen 5 in der Anlagefläche 2.6 des Flansches 2.1 der Bremsscheibe 2 ausgebildet. Diese taschenartigen Vertiefungen 5 haben eine derartige radiale Erstreckung, daß sie die Anlagefläche 1.3 des Flansches 1.1 der Nabe 1 übertreffen und somit eine Ablauföffnung für das im Spalt 3 befindliche Wasser bilden.

Bei dem in Fig. 2 dargestellten Ausführuilgsbeispiel ist der Flansch 1.1 der Radnabe 1 mit Vorsprüngen 1.4 versehen, die die Bohrungen 1.2 für die Radbolzen aufnehmen. Es ergibt sich somit eine wellenförmige Außenkontur des Flansches 1.1 der Nabe 1, die die Anlagefläche 1.3 der Nabe 1 am Flansch 2.1 der Bremsscheibe 2 verringert.

Da die taschenartigen Vertiefungen 4 in die Gießform der Bremsscheibe 2 eingearbeitet sind, erübrigt sich eine spanabhebende Bearbeitung. Eine Schwächung der Bremsscheibe 2, wie bei der Einbringung der Bohrungen 4, wird auf diese Weise vermieden. Die taschenartigen Vertiefungen 5 können demgemäß in jedem Tal der durch die Vorsprünge 1.4 gebildeten wellenförmigen Kontur der Nabe 1 angebracht werden, so daß auch im ungünstigsten Fall eine nahezu vollständige Entwässerung des Ringspaltes 3 möglich ist.

Durch die radiale Ausrichtung der taschenartigen Vertiefungen 5 am außenliegenden Ende des Ringspaltes erzeugen sie bei umlaufendem Rad aufgrund der Zentrifugalwirkung auf die Luft im Ringspalt eine Durchströmung des Ringspaltes 3, die somit die Abfuhr eines Teiles der in das Zwischenstück 2.5 der Bremsscheibe 2 eingeleiteten Wärme zur Folge hat.

### Bezugszeichenliste

- 1: Nabe
- 1.1: Flansch
- 1.2: Bohrung
- 1.3: Anlagefläche
- 1.4: Vorsprung
- 2: Bremsscheibe
- 2.1: Flansch
- 2.2: Bohrung
- 2.3: Reibring
- 2.4: Reibfläche
- 2.5: Zwischenstück
- 2.6: Anlagefläche
- 3: Ringspalt
- 4: Bohrung
- 5: Vertiefung

## Patentansprüche

1. Bremsscheiben-Naben-Konstruktion (2) mit einem einander gegenüberliegende Reibflächen (2.4) aufweisenden Reibring (3), der über ein etwa zylindrisches Zwischenstück (2.5) mit einem ringförmigen Flansch (2.1) zur Befestigung an einem Flansch (1.1) einer Radnabe (1) versehen ist, wobei Öffnungen zum Ablauf von sich im Ringspalt (3) zwischen Radnabe (1) und Bremsscheibe (2) ansammelndem Wasser vorgesehen sind,
**dadurch gekennzeichnet,**
**daß** die Ablauföffnungen in Form von taschenartigen Vertiefungen (5) in der Anlagefläche (1.3 bzw. 2.6) der Flansche (1.1 bzw. 2.1) der Bremsscheibe (2) und/oder der Radnabe (1) ausgebildet sind.

2. Bremsscheiben-Naben-Konstruktion nach Anspruch 1, **dadurch gekennzeichnet, daß** sich die Vertiefungen (5) in radialer Richtung über mindestens die gesamte Breite der Anlagefläche (1.3 bzw. 2.6) zumindest eines der Flansche (1.1 bzw. 2.1) erstrecken.

3. Bremsscheiben-Naben-Konstruktion nach Anspruch 1 oder 2, **dadurch gekennzeichnet, daß** der Flansch (1.1) der Radnabe (1) mit Vorsprüngen (1.4) zur Aufnahme der Radbolzen versehen und der Flansch (2.1) der Bremsscheibe (2) ringförmig ausgebildet ist und die taschenartigen Vertiefungen (5) zumindest im Bereich eines der Täler der wellenförmigen Außenkontur der Radnabe (1) ausgebildet sind.

4. Bremsscheiben-Naben-Konstruktion nach einem der Ansprüche 1 bis 3, **dadurch gekennzeichnet, daß** die taschenartigen Vertiefungen (5) ausschließlich im Flansch (2.1) der Bremsscheibe (2) ausgebildet sind.

## Claims

1. Brake disc/hub structure (2) comprising a friction ring (3) with friction surfaces (2.4) lying opposite one another, which above a more or less cylindrical intermediate part (2.5) is provided with an annular flange (2.1) for attachment to a flange (1.1) of a wheel hub (1), wherein openings are provided for the drainage of water collecting in the annular gap (3) between wheel hub (1) and brake disc (2), **characterized in that** the drainage openings are designed in the form of pocket-like depressions (5) in the bearing surface (1.3 or 2.6) of the flange (1.1 or 2.1) of the brake disc (2) and/or wheel hub (1).

2. Brake disc/hub structure according to Claim 1, **characterized in that** the depressions (5) extend in the radial direction over at least the entire width of the bearing surface (1.3 or 2.6) of at least one of the flanges (1.1 or 2.1).

3. Brake disc/hub structure according to Claim 1 or 2, **characterized in that** the flange (1.1) of the wheel hub (1) is provided with protrusions (1.4) for receiving the wheel studs and the flange (2.1) of the brake disc (2) is of annular shape and the pocket-like depressions (5) are formed at least in the region of one of the troughs of the wave-like outer contour of the wheel hub (1).

4. Brake disc/hub structure according to any of Claims 1 to 3, **characterized in that** the pocket-like depressions (5) are formed only in the flange (2.1) of the brake disc (2).

## Revendications

1. Construction avec moyeu et disque de frein (2) comportant un anneau de friction (3), qui comporte des surfaces de friction (2.4) opposées l'une à l'autre et qui, par l'intermédiaire d'une pièce de séparation (2.5) à peu près cylindrique, est pourvue d'une bride (2.1) annulaire destinée à être fixée contre une bride (1.1) d'un moyeu de roue (1), des orifices étant prévus pour l'écoulement de l'eau s'accumulant dans la fente annulaire (3) entre le moyeu de roue (1) et le disque de frein (2), **caractérisée en ce que** les orifices d'écoulement sont réalisés sous forme de cavités (5) en forme de poches, ménagées dans la face d'appui (respectivement 1.3 et 2.6) des brides (respectivement 1.1 et 2.1) du disque de frein (2) et/ou du moyeu de roue (1).

2. Construction avec moyeu et disque de frein selon la revendication 1, **caractérisée en ce que** les cavités (5) s'étendent dans le sens radial sur au moins toute la largeur de la face d'appui (respectivement 1.3 et 2.6) d'au moins l'une des brides (respectivement 1.1 et 2.1).

3. Construction avec moyeu et disque de frein selon la revendication 1 ou 2, **caractérisée en ce que** la bride (1.1) du moyeu de roue (1) comporte des saillies (1.4) destinées à recevoir les boulons de roue et la bride (2.1) du disque de frein (2) est une bride annulaire et les cavités (5) en forme de poches sont réalisées au moins dans la zone de l'un des creux du contour extérieur ondulé du moyeu de roue (1).

4. Construction avec moyeu et disque de frein selon l'une quelconque des revendications 1 à 3, **caractérisée en ce que** les cavités (5) en forme de poches sont réalisées uniquement dans la bride (2.1) du disque de frein (2).
